# EUROPÄISCHE PATENTANMELDUNG

(11) **EP 4 835 725 A1**
(43) Veröffentlichungstag der Anmeldung: **04.11.2026**
(21) Anmeldenummer: 25173687.2
(22) Anmeldetag: 30.04.2025
(51) Int. Cl.: G06F 30/18, F17D 1/08, G06F 30/20, G06F 111/08, G06F 119/08, G06Q 50/06

(54) **ERMITTLUNG EINER NETZTOPOLOGIE EINES WÄRMENETZES**

(71) Anmelder: Siemens Aktiengesellschaft, 80333 München (DE)
(72) Erfinder: Husarek, Dominik, 81373 München (DE); Kuper, Laura Christina, 81547 München (DE); Metzger, Michael, 85570 Markt Schwaben (DE); Nouicer, Mariem, 81669 München (DE); Stursberg, Paul, 80469 München (DE)
(74) Vertreter: Siemens Patent Attorneys

(57) **Zusammenfassung**

Die Erfindung betrifft ein Verfahren (100) zur Ermittlung einer Topologie eines Wärmenetzes, wobei mehrere Prosumer zum Anschluss an das Wärmenetz vorgesehen sind und eine initiale Topologie als Topologie für das Wärmenetz bereitgestellt wird. Das Verfahren ist gekennzeichnet durch folgende Schritte:
- (102) Ermitteln einer von der Topologie abhängigen Anschlusswahrscheinlichkeit für jeden Prosumer;
- (104) Ermitteln einer neuen Topologie in Abhängigkeit von den Anschlusswahrscheinlichkeiten;
- (106) Ermitteln einer mit der neuen Topologie assoziierten Zielgröße, wobei die Zielgröße von einer oder mehreren bezüglich der Anschlusswahrscheinlichkeiten erwarteten physikalischen Größen des Wärmenetzes abhängig ist;
- (108, 110) Iteratives Durchführen der Schritte mit der jeweils neuen Topologie, bis die Zielgröße einen im Wesentlichen konstanten Wert aufweist; und
- (112) Bereitstellen der iterativ ermittelten Topologie als Netztopologie des Wärmenetzes.

Weiterhin betrifft die Erfindung ein Computerprogrammprodukt.

## Beschreibung

Die vorliegende Erfindung bezieht sich auf Wärmenetze und insbesondere auf eine Ermittlung einer Netztopologie eines Wärmenetzes, einschließlich eines Verfahrens gemäß Anspruch 1 und eines Computerprogrammprodukts gemäß Anspruch 11.

Für Wärmenetze ist eine effiziente Verteilung thermischer Energie entscheidend für eine Bereitstellung nachhaltiger und kostengünstiger Heizlösungen, insbesondere für städtische Gebiete. Wärmenetze umfassen typischerweise eine zentrale Wärmeerzeugungsanlage und ein Netzwerk von thermischen isolierten Verteilungsrohren, die heißes Wasser oder Dampf und somit Wärme an mehrere Gebäude innerhalb eines Gebietes verteilen. Hierbei sollen die Wärmenetze energetisch effizient und nachhaltig ausgelegt und betrieben werden. Insbesondere sollen die Wärmeverluste möglichst minimiert werden.

Moderne Wärmenetze integrieren weiterhin erneuerbare Energiequellen, wie beispielsweise Geothermie, Solarthermie und/oder Biomasse, um die Abhängigkeit von fossilen Brennstoffen zu reduzieren und die Kohlenstoffemissionen zu verringern. Die Integration dieser vielfältigen Wärmequellen stellt eine technische Herausforderung in Bezug auf Design, die Steuerung und/oder die Optimierung von Wärmenetzen dar.

Besonders bei Wärmenetzen ist zur Lösung der genannten technischen Herausforderung eine Kenntnis beziehungsweise eine Ermittlung einer möglichst optimalen Topologie des Wärmenetzes (Netztopologie) entscheidend. Die Topologie des Wärmenetzes bezieht sich hierbei auf das räumliche Layout der Verteilungsrohre und ihrer Verbindungen. Eine verbesserte Topologie kann die Gesamteffizienz des Systems erhöhen, indem sie beispielsweise Pumpkosten reduziert, Wärmeverluste minimiert und eine zuverlässige Wärmelieferung an alle angeschlossenen Gebäude sicherstellt.

Die Ermittlung einer optimalen Wärmenetztopologie umfasst typischerweise eine Berücksichtigung verschiedener Einflussfaktoren, einschließlich der Standorte von Wärmeerzeugern und Wärmeverbrauchern. Bekannte Verfahren zur Topologieermittlung basieren typischerweise auf einer manuellen Planung und vereinfachten Optimierungstechniken, die möglicherweise die Komplexität moderner Wärmenetze nicht vollständig erfassen und zudem rein kostengetrieben sind.

Eine der technischen Herausforderungen beim Design beziehungsweise der technischen Auslegung von Wärmenetzen ist die Berücksichtigung von sogenannten Prosumern. Prosumer sind Energiesysteme beziehungsweise Anschlussteilnehmer, die Wärme ausspeisen und, im Gegensatz zu Wärmeverbrauchern, Wärme ebenfalls in das Wärmenetz einspeisen können. Durch die lokale Wärmeeinspeisung der Prosumer erhöht sich die Komplexität von Wärmenetzen, da die Verteilung der Wärme über das Wärmenetz durch diese maßgeblich beeinflusst wird. Weiterhin weisen größere beziehungsweise zu groß ausgelegte Wärmenetze höhere Wärmeverluste und geringere Fließgeschwindigkeiten auf. Kleinere beziehungsweise zu klein ausgelegte Wärmenetze weisen höhere Druckverluste auf. Da die Verteilung der Wärme wiederum im Zusammenhang mit der Topologie des Wärmenetzes steht, ist es eine technische Herausforderung für komplexe, das heißt insbesondere für Prosumer umfassende Wärmenetze, eine möglichst technisch und energetisch effiziente Topologie zu ermitteln.

Weiterhin erhöhen Prosumer die Unsicherheiten bezüglich des Betriebs des Wärmenetzes. Beispielsweise könnten diese ihre erzeugte Wärme selbst nutzen und sich dadurch entscheiden, sich nicht an das Wärmenetz anzuschließen und/oder alternative Heizungslösungen vorsehen. Diese Einflussfaktoren beeinflussen die Gesamtleistung des Wärmenetzes, sowohl bezüglich seiner technischen Ausgestaltung, beispielsweise in seiner Topologie, als auch bezüglich seiner wirtschaftlichen Tragfähigkeit.

Der vorliegenden Erfindung liegt die Aufgabe zugrunde, eine möglichst optimale Netztopologie des Wärmenetzes unter einer Berücksichtigung von dynamischen und unsicheren Anschlussentscheidungen von Prosumern bereitzustellen.

Die Aufgabe wird durch ein Verfahren mit den Merkmalen des unabhängigen Patentanspruches 1 sowie durch ein Computerprogrammprodukt mit den Merkmalen des unabhängigen Patentanspruches 11 gelöst. In den abhängigen Patentansprüchen sind vorteilhafte Ausgestaltungen und Weiterbildungen der Erfindung angegeben.

Das erfindungsgemäße Verfahren zur Ermittlung einer Topologie eines Wärmenetzes, wobei mehrere Prosumer zum Anschluss an das Wärmenetz vorgesehen sind und eine initiale Topologie als Topologie für das Wärmenetz bereitgestellt wird, ist gekennzeichnet durch folgende Schritte:
- Ermitteln einer von der Topologie abhängigen Anschlusswahrscheinlichkeit für jeden Prosumer;
- Ermitteln einer neuen Topologie in Abhängigkeit von den Anschlusswahrscheinlichkeiten;
- Ermitteln einer mit der neuen Topologie assoziierten Zielgröße, wobei die Zielgröße von einer oder mehreren bezüglich der Anschlusswahrscheinlichkeiten erwarteten physikalischen Größen des Wärmenetzes abhängig ist;
- Iteratives Durchführen der Schritte mit der jeweils neuen Topologie, bis die Zielgröße einen im Wesentlichen konstanten Wert aufweist; und
- Bereitstellen der iterativ ermittelten Topologie als Netztopologie des Wärmenetzes.

Das erfindungsgemäße Verfahren und/oder eine oder mehrere Funktionen, Merkmale und/oder Schritte des erfindungsgemäßen Verfahrens und/oder einer seiner Ausgestaltungen sind oder können computergestützt beziehungsweise computerimplementiert sein.

Der Begriff Prosumer bezieht sich auf ein mögliches Anschlusssystem des Wärmenetzes, das Wärme verbraucht und gegebenenfalls Wärme erzeugt und diese erzeugte Wärme wenigstens teilweise zurück in das Wärmenetz speist. Mit anderen Worten speisen Prosumer typischerweise Wärme aus dem Wärmenetz aus und in dieses ein. Ein Prosumer kann ein Energiesystem, insbesondere ein Gebäude und/oder eine Anlage sein, die Wärme aus dem Wärmenetz beziehen kann und optional ebenfalls potenziell überschüssige Wärme in das Wärmenetz zurückführen kann. Beispielsweise sind Prosumer Wohngebäude mit Solarthermieanlagen und/oder Industrieanlagen mit Abwärmerückgewinnungssystemen, insbesondere Gebäude, die Räume kühlen und die entsprechende Wärme in das Wärmenetz einspeisen. Vorliegend werden reine Wärmeverbraucher und reine Wärmeerzeuger ebenfalls als Prosumer angesehen. Ein Prosumer kann somit ebenfalls ein reiner beziehungsweise vollständiger Wärmeverbraucher oder ein reiner beziehungsweise vollständiger Wärmeerzeuger sein.

Eine Topologie eines Wärmenetzes bezieht sich auf das physische und räumliche Layout und die Verbindungen der Verteilungsrohre, Wärmetauscher und/oder Prosumer-Anschlüsse innerhalb des Wärmenetzes. Sie umfasst somit die räumliche Anordnung der Komponenten und die Wege, über welche die thermische Energie beziehungsweise die Wärme verteilt wird. Die Topologie ist somit technisch entscheidend für die Effizienz und Leistung des Wärmenetzes.

Eine Anschlusswahrscheinlichkeit ist ein Maß für die Wahrscheinlichkeit, dass ein Prosumer an das Wärmenetz angeschlossen wird beziehungsweise ist. Diese Wahrscheinlichkeit ist von verschiedenen Einflussfaktoren abhängig, wie beispielsweise einer technischen und/oder wirtschaftlichen Machbarkeit des Anschlusses, den dem Prosumer zur Verfügung stehenden alternativen Heizoptionen und/oder der Nähe zu einer bestehenden Wärmenetzinfrastruktur. Ob sich ein Prosumer für einen Anschluss entscheidet, beeinflusst maßgeblich die Topologie und somit die Effizienz des Wärmenetzes. Es ist somit für die Ermittlung einer möglichst optimalen Topologie technisch entscheidend, zu modellieren, ob sich ein möglicher Prosumer für einen Anschluss an das Wärmenetz entscheidet. Hierbei erfolgt diese Modellierung technisch objektiv, beispielsweise mittels eines Entscheidungsmodells, und basierend auf technischen Einflussfaktoren.

Eine Zielgröße im Kontext dieser Erfindung ist ein objektives Maß zur Bewertung der Leistung und/oder Effizienz einer Topologie. Sie leitet sich typischerweise aus bezüglich der Anschlusswahrscheinlichkeiten erwarteten physikalischen beziehungsweise technischen Größen ab, wie beispielsweise erwarteten Wärmeflüssen, (Erwartungswert des Wärmeflüsse in den jeweiligen erwarteten Rohrleitungen), erwarteten Rohrleitungslängen (Erwartungswert der Rohleitungslängen) und/oder einer erwarteten Gesamtwärmeleistung (Erwartungswert der Gesamtwärmeleistung) ab. Somit dient die Zielgröße als technische Metrik für die technische Bewertung verschiedener Topologien, beispielsweise im Hinblick auf ihre energetische Effizienz und/oder ihre Nachhaltigkeit, insbesondere bezüglich erneuerbarer Energien und Kohlenstoffdioxidemissionen.

In einem ersten Schritt des erfindungsgemäßen Verfahrens werden die Anschlusswahrscheinlichkeiten ermittelt, das heißt für jeden Prosumer wird eine für ihn spezifische Anschlusswahrscheinlichkeit ermittelt. Dies kann beispielsweise mittels eines mathematischen Entscheidungsmodells erfolgen, welches entsprechende technische Einflussfaktoren berücksichtigt. Hierbei sind die Anschlusswahrscheinlichkeiten grundsätzlich von der Topologie des Wärmenetzes abhängig. Das ist deshalb der Fall, da die Entscheidung eines Prosumers zum Anschluss von topologieabhängigen technischen Größen, wie beispielsweise dem lokalen Wärmefluss in der Rohrleitung, der Rohrleitungslänge und/oder der (Prosumer) eigenen lokalen Wärmeleistung, den Abstand zum nächsten und/oder zentralen Wärmeerzeugern und/oder den Verzweigungen beziehungsweise vom räumlichen Verlauf des Wärmenetzes abhängig sein kann.

In einem zweiten Schritt des erfindungsgemäßen Verfahrens wird eine neue Topologie basierend auf den ermittelten Anschlusswahrscheinlichkeiten ermittelt. Beispielsweise erfolgt dies mittels eines Optimierungsverfahrens, bei welchem eine Zielfunktion für das Wärmenetz minimiert oder maximiert wird. Hierbei ist die Zielfunktion von den Anschlusswahrscheinlichkeiten abhängig beziehungsweise von mit diesen assoziierten Größen, beispielsweise erwarteten Rohrleitungslängen und/oder einer erwarteten Gesamtleistung. Entscheidend ist, dass die neue Topologie basierend auf den Anschlusswahrscheinlichkeiten ermittelt wird und somit diese berücksichtigt. Dies führt typischerweise zu einer bezüglich der initialen oder vorangegangenen Topologie verbesserten Topologie.

In einem dritten Schritt des erfindungsgemäßen Verfahrens wird eine mit der neuen Topologie assoziierten Zielgröße, wobei die Zielgröße von einer oder mehreren bezüglich der Anschlusswahrscheinlichkeiten erwarteten physikalischen Größen des Wärmenetzes abhängig ist, ermittelt. Die Zielgröße ist somit ein quantitatives und objektives Maß für die Geeignetheit einer Topologie beziehungsweise eines Wärmenetzes. Die physikalischen Größen sind in dem Sinne erwartet, dass diese gemäß der Anschlusswahrscheinlichkeiten in Form von Erwartungswerten erwartet werden. Beispielsweise kann die Zielgröße abhängig von den Wärmeflüssen, den Rohrleitungslängen und/oder der Gesamtleistung des Wärmenetzes sein. Die ermittelte Topologie wird somit durch die Zielgröße technisch entsprechend bewertet.

In einem vierten Schritt des erfindungsgemäßen Verfahrens werden die ersten bis dritten Schritte iterativ so lange durchgeführt, bis die Zielgröße einen im Wesentlichen konstanten Wert aufweist. Im Wesentlichen konstant bedeutet hierbei, dass sich die Zielgröße, bis auf eine festgelegte Abweichung, in ihrem Wert stabilisiert hat. Beispielsweise kann eine Abweichung kleiner oder gleich 10 Prozent, insbesondere von kleiner oder gleich 1 Prozent, eine solche Stabilisierung charakterisieren. Alternativ oder ergänzend könnte das Verfahren nach einer festgelegten Anzahl von Iterationsschritten beendet werden. Wird die Zielgröße mit *P*_{DH,*i*} im i-ten Iterationsschritt bezeichnet, so gilt für eine im Wesentlichen konstante Zielgröße *P*_{DH,*i*+1} ≤ *P*_{DH,*i*} + *ε*, wobei *ε* eine festgelegte maximal erlaubte Abweichung bezeichnet.

Gilt *P*_{DH,*i*+1} ≤ *P*_{DH,*i*} + *ε*, so wird schließlich die ermittelte Topologie in einem fünften Schritt des Verfahrens als finale Netztopologie des Wärmenetzes bereitgestellt. Dadurch ist somit die finale Topologie und somit die Netztopologie des Wärmenetzes ermittelt.

Das beschriebene Verfahren ist somit grundsätzlich iterativ und jeder Schritt ist von jedem Schritt abhängig. Die Anschlusswahrscheinlichkeiten sind von der Topologie abhängig, die Topologie von den Anschlusswahrscheinlichkeiten und die Zielgröße wiederum von der Topologie. Diese komplexen gegenseitigen Abhängigkeiten werden durch das iterative Verfahren berücksichtigt und vorteilhaft bezüglich der Zielgröße aufgelöst. Mit anderen Worten wird dadurch eine bezüglich der Zielgröße möglichst optimale Topologie ermittelt.

Weiterhin weist das Verfahren wenigstens einen oder mehrere der folgenden Vorteile auf.

Iterative Optimierung unter Berücksichtigung des Prosumer-Verhaltens: Der iterative Ansatz des Verfahrens, der die Anschlusswahrscheinlichkeiten von Prosumern berücksichtigt, ermöglicht eine realistischere und dynamischere Optimierung der Wärmenetz-Topologie. Im Gegensatz zu bekannten Methoden, die von festen Anschlussraten ausgehen und sich auf eine manuelle Planung stützen, passt das erfindungsgemäße Verfahren die Topologie basierend auf der Wahrscheinlichkeit an, mit der sich Prosumer an das Wärmenetz anschließen. Dies führt zu einer genaueren Berücksichtigung von realen Szenarien, in denen Prosumer-Entscheidungen die Systemleistung und wirtschaftliche Tragfähigkeit des Wärmenetzes erheblich beeinflussen können.

Verbesserte Wirtschaftlichkeit: Durch die Berücksichtigung topologieabhängiger Anschlusswahrscheinlichkeiten für jeden Prosumer kann das Verfahren zusätzlich zur technisch effizienten Ausgestaltung eine möglichst wirtschaftlich tragfähige Topologie ermitteln. Dies reduziert das Risiko einer Überdimensionierung oder einer Unterauslastung des Wärmenetzes, was ebenfalls technische Vorteile mit sich bringt. Der iterative Prozess stellt sicher, dass die finale Topologie beziehungsweise Netztopologie mit den erwarteten Prosumer-Adoptionsraten möglichst übereinstimmt, was potenziell zu kosteneffektiveren Investitionen führt.

Erhöhte Flexibilität und Skalierbarkeit: Die Fähigkeit des Verfahrens, neue Topologien in Abhängigkeit von Anschlusswahrscheinlichkeiten zu ermitteln, ermöglicht eine größere Flexibilität im Systemdesign. Dies ist besonders vorteilhaft in Szenarien, in denen sich das Prosumer-Verhalten im Laufe der Zeit oder in verschiedenen städtischen Kontexten ändern kann. Der Ansatz kann leicht verschiedene Prosumer-Typen, von Wohngebäuden bis hin zu Industrieanlagen, berücksichtigen und kann skaliert werden, um große, komplexe Fernwärmenetze zu handhaben.

Datengesteuerte objektive Entscheidungsfindung: Durch die Einbeziehung prosumerspezifischer Daten und/oder geografischer Informationen in die Ermittlung der Anschlusswahrscheinlichkeiten nutzt das Verfahren verfügbare Daten, um möglichst objektive und realitätsnahe Anschlusswahrscheinlichkeiten zu ermitteln. Dieser datengesteuerte Ansatz ist eine Verbesserung gegenüber bekannten Verfahren, die mögliche Anschlussentscheidungen der Prosumer und der lokalen Bedingungen nicht berücksichtigen.

Ganzheitliche Systemoptimierung: Die Verwendung einer Zielgröße, die von erwarteten physikalischen Größen des Wärmenetzes abhängt, wie beispielsweise den Erwartungswerten der Rohrleitungslängen und/oder der Gesamtleistung, stellt sicher, dass die ermittelte Topologie die technische und physikalische Gesamtsystemleistung berücksichtigt. Dieser ganzheitliche Ansatz geht über die bloße Minimierung von Rohrlängen und/oder Anschlusskosten hinaus und berücksichtigt die tatsächlichen Energieverteilungs- und Bedarfsmuster innerhalb des Wärmenetzes.

Reduzierte Unsicherheiten: Das Verfahren kann dazu dienen die Unsicherheit im Planungsprozess zu reduzieren. Mittels des Verfahrens wird eine finale möglichst optimale Topologie ermittelt, wodurch die Notwendigkeit kostspieliger Revisionen und/oder Anpassungen nach der Implementierung minimiert wird.

Integration fortschrittlicher Algorithmen: Die Flexibilität des Verfahrens ermöglicht die Integration fortschrittlicher Optimierungstechniken und Graph-Algorithmen, wie sie beispielsweise zur Berechnung von Steiner-Bäumen verwendet werden. Dies ermöglicht die Nutzung moderner Berechnungsmethoden, um komplexe Topologieoptimierungsprobleme effizienter zu lösen. Dadurch kann die Rechenzeit reduziert werden und zudem die Topologie von komplexeren und/oder größeren Wärmenetzen effizient ermittelt werden.

Abgleich von Wärmeerzeugung und Wärmeverbrauch: Durch die Berücksichtigung von Anschlusswahrscheinlichkeiten von Prosumern und der physikalischen Größen des Wärmenetzes trägt das Verfahren dazu bei, ein besseres Gleichgewicht zwischen Wärmeangebot und -nachfrage zu erreichen. Dies kann zu einer verbesserten Gesamtsystemeffizienz, reduzierten Wärmeverlusten und potenziell niedrigeren Betriebskosten führen.

Nachhaltigere Stadtplanung: Die Fähigkeit des Verfahrens, Wärmenetztopologien unter Berücksichtigung des Prosumer-Verhaltens zu optimieren, steht im Einklang mit den Zielen einer nachhaltigen Stadtplanung. Es kann die Integration erneuerbarer Energiequellen und Abwärmerückgewinnungssystemen in Wärmenetzen erleichtern und damit den Übergang zu umweltfreundlicheren Heizlösungen in städtischen Gebieten unterstützen.

Durch die synergetische Kombination von iterativer Optimierung und Modellierung von Anschlussentscheidungen stellt das Verfahren eine effiziente, umfassendere und realitätsnähere Ermittlung von Wärmenetztopologien bereit, was die Effizienz, den Betrieb, die Wirtschaftlichkeit sowie die Akzeptanz von Wärmenetzen verbessert.

Das erfindungsgemäße Computerprogrammprodukt zur Ermittlung einer Topologie eines Wärmenetzes ist dadurch gekennzeichnet, dass es Anweisungen umfasst, die, wenn sie von einer Recheneinheit, insbesondere einem Computer, ausgeführt werden, diese veranlassen, ein Verfahren und/oder Schritte des Verfahrens gemäß einem der Ansprüche 1 bis 10 auszuführen.

Es ergeben sich zum erfindungsgemäßen Verfahren gleichartige, gleichwertige und gleichwirkende Vorteile.

Gemäß einer vorteilhaften Ausgestaltung der Erfindung ist die Zielgröße abhängig von erwarteten Rohrleitungslängen, erwarteten Wärmeflüssen (englisch: heat flow rates along pipes) und/oder einer erwarteten Gesamtwärmeleistung (englisch: peak thermal loads of prosumers).

Dadurch werden vorteilhafterweise wichtige physikalische und technische Größen des Wärmenetzes berücksichtigt. Durch die Einbeziehung dieser Faktoren in die Zielgröße kann das Verfahren die Topologie optimieren, um Effizienz und Kapazität auszubalancieren.

Gemäß einer vorteilhaften Ausgestaltung der Erfindung ist die Zielgröße proportional zu einer Summe über die erwarteten Rohrleitungslängen und indirekt proportional zur erwarteten Gesamtwärmeleistung.

Diese spezifische Beziehung zwischen der Zielgröße und den physikalischen Parametern ermöglicht einen ausgewogenen Optimierungsansatz. Durch die genannte Ausgestaltung werden somit die summierten und gegebenenfalls in der Summe verschieden gewichteten Rohrleitungslängen pro Wärmeleistung als Zielgröße herangezogen. Eine unterschiedliche Gewichtung der einzelnen Rohrleitungslängen ist insbesondere bei verschieden ausgebildeten Rohrleitungen, beispielsweise verschiedenen Leitungsdurchmessern und somit verschiedenen Wärmeflüssen, vorteilhaft.

Die genannte vorteilhafte Zielgröße ist zudem eine entscheidende Größe für die Prosumer und ihre Anschlussentscheidung. Das ist deshalb der Fall, da die jeweiligen Rohrleitungslängen sowie ihre jeweilige Ausgestaltung, beispielsweise ihr Durchmesser, typischerweise mit dem Aufwand der Ausgestaltung des Wärmenetzes assoziiert sind und dieser möglichst pro Kilowattstunde, das heißt pro Gesamtwärmeleistung möglichst minimal für die Prosumer gehalten werden sollte.

Mit anderen Worten wird die Zielgröße vorteilhafterweise gemäß ${P}_{DH , i} ∝ {\sum }_{e} \left[{c}_{i}\left(e\right)⋅{l}_{i}\left(e\right)\right] / {CNS}_{i}$ ausgebildet, wobei die Summe über alle Kanten *e* beziehungsweise Rohrleitungen des Wärmenetzes erfolgt. Hierbei bezeichnet *lᵢ*(*e*) die jeweilige Rohrleitungslänge, die mit der Kante *e* des Wärmenetzes in der *i*-ten Iteration assoziiert ist. Die Gewichtungsfaktoren *cᵢ*(*e*) der Summe können somit grundsätzlich von der Kante beziehungsweise der jeweiligen Rohrleitung des Wärmenetzes, die mit der Kante *e* assoziiert ist, abhängig sein.

Besonders bevorzugt ist hierbei die Ausgestaltung *cᵢ*(*e*) = *a*HF*ᵢ*(*e*) + *b*, wobei HF*ᵢ*(*e*) den erwarteten Wärmefluss in der *i*-ten Iteration der jeweiligen Kante (Rohrleitung) der Topologie beziehungsweise des zur Topologie zugehörigen Graphen bezeichnet. Weiterhin bezeichnet CNS*ᵢ* die erwartete Gesamtwärmeleistung des Wärmenetzes in der *i*-ten Iteration. Es gilt somit gemäß der vorteilhaften Ausgestaltung *P*_{DH,*i*} ∝ ∑*ₑ*[*cᵢ*(*e*) · *lᵢ*(*e*)]/CNS*ᵢ* ∝ ∑*ₑ*[(*a*HF*ᵢ*(*e*) + *b*) *· lᵢ*(*e*)]/ CNS*ᵢ*, wobei *P*_{DH,*i*} wiederrum die Zielgröße in der *i*-ten Iteration bezeichnet. Hierbei charakterisieren die Konstanten *a, b* eine lineare Abhängigkeit von den jeweiligen Wärmeflüssen HF*ᵢ*(*e*). Die Zielgröße bildet somit eine mit den HF*ᵢ*(*e*) linear gewichtete Summe über die Rohrleitungen *lᵢ*(*e*) aus. Die Konstanten weisen beispielsweise die Einheit Tonnen CO₂ pro Kilowatt auf. Typischerweise ist somit ein möglichst kleiner Wert der Zielgröße vorteilhaft.

In einer bevorzugten Ausgestaltung können die Wärmeflüsse in den jeweiligen Rohrleitungen näherungsweise als konstant angesehen werden. In diesem Fall wird die Zielgröße durch *P*_{DH,*i*} ∝ ∑*ₑlᵢ*(*e*)/CNS*ᵢ* ∝ *Lᵢ*/CNS*ᵢ* ausgebildet, das heißt durch das Verhältnis aus Gesamtrohrleitungslänge beziehungsweise Gesamtlänge *Lᵢ* des Wärmenetzes zu seiner Gesamtleistung CNS*ᵢ*. In diesem Fall ist ebenfalls ein möglichst kleiner Wert der Zielgröße vorteilhaft.

Gemäß einer vorteilhaften Ausgestaltung der Erfindung wird die initiale Topologie und/oder die neue Topologie mittels eines Optimierungsverfahrens ermittelt.

Die Verwendung eines Optimierungsverfahrens zur Topologieermittlung ermöglicht eine systematische und effiziente Erforschung des Lösungsraums. Dieser Ansatz kann technisch vorteilhafte Lösungen identifizieren, die durch manuelle Designprozesse möglicherweise nicht erkennbar sind. Dadurch können effizientere und kostengünstigere Topologien und somit Wärmenetze ermittelt werden.

Gemäß einer vorteilhaften Ausgestaltung der Erfindung werden die initiale Topologie und/oder die neu ermittelten Topologien mittels eines Graph-Algorithmus ermittelt.

Graphen-Algorithmen sind besonders gut für Netzwerkdesignprobleme, wie beispielsweise Wärmenetze geeignet. Sie können die komplexen und kombinatorisch vielfältigen Verbindungen zwischen Wärmequellen, Verteilungsrohren und Prosumern effizient handhaben und ermöglichen eine schnelle und rechnerisch effiziente Ermittlung topologischer Konfigurationen. Verschiedene Typen von bekannten Graphen-Algorithmen können verwenden werden, wie beispielsweise Minimum-Spanning-Tree-Algorithmen zur Ermittlung der effizientesten Verbindungen und/oder Kürzeste-Wege-Algorithmen zur Optimierung von Verteilungsrouten. Die Wahl des Algorithmus kann von den spezifischen Zielen des Wärmenetzdesigns und der rechnerischen Komplexität des Problems abhängen.

Gemäß einer vorteilhaften Ausgestaltung der Erfindung wird ein Graphen-Algorithmus zur Berechnung von Steiner-Bäumen verwendet.

Steiner-Baum-Algorithmen, insbesondere belohnende Steiner-Baum-Algorithmen (englisch: Price Collecting Steiner Trees) sind besonders vorteilhaft für das Design von Wärmenetzen, da sie optimale oder nahezu optimale Wege (Verläufe der Rohrleitungen) finden können, um eine Menge von Punkten, beispielsweise Wärmequellen und Wärmeverbraucher, mit minimaler Gesamtkantenlänge zu verbinden. Dies kann zu effizienteren Netzwerklayouts mit reduzierten Rohrlängen und damit assoziierten technischen Aufwand, beispielsweise Pumpleistungen, und ebenfalls verringerten Kosten führen. Dies wird durch einen möglichst kleinen Wert der Zielgröße *P*_{DH,*i*} ∝ ∑*ₑ*[*cᵢ*(*e*) · *lᵢ*(*e*)]/CNS*ᵢ* erreicht, sodass der genannte Algorithmus synergetisch mit der genannten Zielgröße zusammenwirkt. Weiterhin könnten verschiedene Approximationsalgorithmen für Steiner-Baum-Probleme verwendet werden, da das Finden des exakten optimalen Steiner-Baums für große Netzwerke NP-schwer ist. Heuristische Ansätze und/oder Metaheuristiken könnten ebenfalls verwendet werden, um die Lösungsqualität mit der rechnerischen Effizienz in Einklang zu bringen.

Gemäß einer vorteilhaften Ausgestaltung der Erfindung werden die Anschlusswahrscheinlichkeiten mittels prosumerspezifischer Daten ermittelt.

Die Einbeziehung prosumerspezifischer Daten ermöglicht eine genauere und somit verbesserte Modellierung der prosumerabhängigen Entscheidungen. Dies führt zu realistischeren Vorhersagen von Anschlusswahrscheinlichkeiten und folglich zu einer robusteren und wirtschaftlich tragfähigeren Topologie. Die prosumerspezifischen Daten könnten Einflussfaktoren, wie beispielsweise aktuelle Heizsysteme, Energieverbrauchsmuster, Gebäudemerkmale und/oder sozioökonomische Indikatoren umfassen. Maschinelle Lernmodelle, insbesondere neuronale Netze (KI), könnten verwendet werden, um die genannten Daten zu analysieren und personalisierte Anschlusswahrscheinlichkeitsmodelle für jeden Prosumer abzuleiten.

Gemäß einer vorteilhaften Ausgestaltung der Erfindung werden die Anschlusswahrscheinlichkeiten auf der Grundlage geografischer Daten der Prosumer ermittelt.

Geografische Daten liefern entscheidenden Kontext für die Bewertung der Machbarkeit und Attraktivität von Wärmenetzanschlüssen. Faktoren, wie beispielsweise die Entfernung zur bestehenden Netzwerkinfrastruktur, das lokale Gelände und die städtische Dichte können die Entscheidung eines Prosumers für einen Anschluss erheblich beeinflussen.

Fortschrittliche geografische Informationssysteme (GIS) könnten in das Verfahren integriert werden, um detaillierte räumliche Analysen bereitzustellen. Dies könnte die Berücksichtigung natürlicher Barrieren, bestehender Versorgungskorridore und/oder des Potenzials für zukünftige Stadtentwicklung umfassen, die die jeweiligen Anschlusswahrscheinlichkeiten beeinflussen könnten.

Gemäß einer vorteilhaften Ausgestaltung der Erfindung werden die

Anschlusswahrscheinlichkeiten mittels eines diskreten Entscheidungsmodells ermittelt.

Diskrete Entscheidungsmodelle bieten einen strukturierten, objektiven und technischen Ansatz zur Modellierung von Prosumer-Entscheidungen und ermöglichen die Einbeziehung mehrerer Einflussfaktoren, die die Entscheidung für den Anschluss an das Wärmenetz beeinflussen und somit die Anschlusswahrscheinlichkeiten. Die Anschlusswahrscheinlichkeiten beeinflussen wiederum die konkrete technische Ausgestaltung des Wärmenetzes, insbesondere seiner Topologie. Somit ist es entscheidend bei der technischen Auslegung und des Betriebs des Wärmenetzes die Entscheidungen der Prosumer mitzuberücksichtigen. Würden diese nicht berücksichtigt werden, so kann ein technisch effizientes Wärmenetz mit einer zughörigen Topologie nicht bereitgestellt werden. Vorliegend werden die Entscheidungen der Prosumer technisch über jeweiligen Anschlusswahrscheinlichkeiten berücksichtigt. Hierzu können verschiedene diskrete Entscheidungsmodellierungsverfahren verwendet werden, wie beispielsweise Logit-Modelle, Probit-Modelle und/oder fortschrittlichere Verfahren, wie beispielsweise verschachtelte Logit-Modelle und/oder gemischte Logit-Modelle. Die Verwendung eines konkreten Verfahrens zur Entscheidungsmodellierung kann von der Komplexität des Entscheidungsprozesses und/oder den verfügbaren Daten zu Prosumer-Präferenzen und/oder -Verhaltensweisen abhängig sein.

Gemäß einer bevorzugten Ausgestaltung der Erfindung ist das Wärmenetz als Fernwärme und/oder Nahwärmenetz ausgebildet.

Vorteilhafterweise können dadurch die lokalen technischen Herausforderungen, die mit solchen lokalen Wärmenetzen verbunden sind, verbessert gelöst werden. Dadurch können vorteilhafterweise verbesserte Fernwärme und insbesondere Nahwärmenetze bereitgestellt werden. Insbesondere können dadurch lokale Energiequellen, insbesondere lokale erneuerbare Energiequellen, verbessert integriert werden.

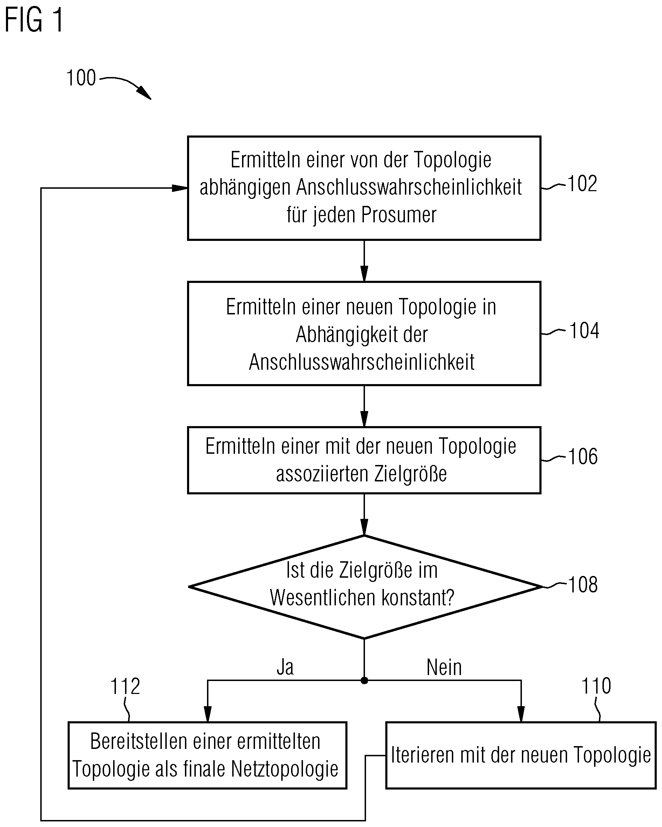

Weitere Vorteile, Merkmale und Einzelheiten der Erfindung ergeben sich aus den im Folgenden beschriebenen Ausführungsbeispielen sowie anhand der Zeichnung. Dabei zeigen schematisiert die Figur ein Flussdiagramm, das ein Verfahren zur Ermittlung der Topologie eines Wärmenetzes gemäß einer Ausgestaltung der Erfindung veranschaulicht.

Gleichartige, gleichwertige oder gleichwirkende Elemente können in einer der Figuren oder in den Figuren mit denselben Bezugszeichen versehen sein.

Die Figur zeigt ein Flussdiagramm, das ein Verfahren 100 zur Ermittlung der Topologie eines Wärmenetzes gemäß einer Ausgestaltung der Erfindung veranschaulicht.

Das dargestellte Verfahren startet mit einem Schritt 102, bei dem eine topologieabhängige Anschlusswahrscheinlichkeit für jeden Prosumer ermittelt wird. Dieser Schritt kann die Analyse und/oder Verwendung prosumerspezifischer Daten, wie beispielsweise aktuelle Heizsysteme, Energieverbrauchsmuster, Gebäudemerkmale und/oder geografischer Daten, wie beispielsweise die Entfernung zu einer bestehenden Netzwerkinfrastruktur und/oder das lokale Gelände umfassen. Ein diskretes Entscheidungsmodell, wie beispielsweise ein Logit- und/oder Probit-Modell, kann verwendet werden, um die genannten Anschlusswahrscheinlichkeiten basierend auf den verfügbaren Daten zu berechnen.

In einem Schritt 104 wird eine neue Topologie in Abhängigkeit von den ermittelten Anschlusswahrscheinlichkeiten ermittelt. Dieser Schritt kann eine Verwendung einer Optimierungsmethode und/oder eines Graphen-Algorithmus umfassen, um eine möglichst effiziente Topologie zu ermitteln. Hierbei hängt die ermittelte Topologie von den Anschlusswahrscheinlichkeiten ab, beispielsweise über hiervon abgeleiteten erwarteten physikalischen und technischen Größen des Wärmenetzes, insbesondere einer erwarteten Gesamtleistung und/oder den mittels der erwarteten Wärmeflüsse gewichtet summierten erwarteten Rohrleitungslängen, die bezüglich der Anschlusswahrscheinlichkeiten als Erwartungswerte ermittelt werden. Weiterhin kann ein Steiner-Baum-Algorithmus verwenden werden, um einen optimalen Rohrleitungsweg zu finden und/oder Wärmequellen und/oder Wärmeverbraucher und/oder Prosumer mit möglichst minimaler Gesamtrohrlänge zu verbinden.

In einem Schritt 106 wird eine mit der neu ermittelten Topologie verbundene Zielgröße ermittelt. Diese Zielgröße hängt von einer oder mehreren erwarteten physikalischen Größen des Wärmenetzes ab. Hierbei werden die Anschlusswahrscheinlichkeiten ebenfalls berücksichtigt. Sie ist insbesondere proportional zu einer gewichteten Summe der Rohrleitungslängen, besonders bevorzugt proportional zur Gesamtrohrleitungslänge und umgekehrt proportional zur erwarteten Gesamtwärmeleistung. Diese Formulierung ermöglicht einen ausgewogenen Optimierungsansatz, der sowohl die Energieverteilungseffizienz als auch die Systemkapazität berücksichtigt.

Das Verfahren umfasst eine Entscheidung 108, bei welcher beurteilt wird, ob die Zielgröße einen im Wesentlichen konstanten Wert erreicht hat. Ist dies nicht der Fall, dann kehrt das Verfahren zum Schritt 102 zurück und iteriert mit der neuen Topologie. Dieser iterative Ansatz ermöglicht eine kontinuierliche Verfeinerung der Topologie und somit des Netzwerkdesigns und berücksichtigt zudem die komplexen Abhängigkeiten zwischen Anschlusswahrscheinlichkeiten, Topologie und Zielgröße.

Hat sich die Zielgröße im genannten Sinne in ihrem Wert stabilisiert, was darauf hinweist, dass mit weiteren Iterationen voraussichtlich keine signifikanten Verbesserungen mehr erreicht werden können, geht das Verfahren zum Schritt 110 über. Hier wird die iterativ ermittelte Topologie als finale Topologie, das heißt als Netztopologie des Wärmenetzes, bereitgestellt.

Das Flussdiagramm stellt somit einen sequenziellen Prozess mit einer Rückkopplungsschleife dar, der eine dynamische Optimierung der Wärmenetz-Topologie ermöglicht. Diese Methode kann für verschiedene Größenordnungen von Wärmenetzen verwendet werden, von lokalen Wärmenetzen, die ein kleines Viertel versorgen, bis hin zu großflächigen Systemen, die ganze Städte abdecken. Die iterative Natur des Prozesses stellt sicher, dass die finale Topologie eine stabile und optimierte Lösung darstellt, die Effizienz, Kosteneffektivität und Prosumer-Adoptionsraten synergetisch ausbalanciert.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 100: Verfahren
- 102: Ermitteln der von der Topologie abhängigen Anschlusswahrscheinlichkeiten
- 104: Ermitteln der neuen Topologie
- 106: Ermitteln der Zielgröße
- 108: Entscheidung
- 110: Iteration mit der neu ermittelten Topologie
- 112: Bereitstellen der iterativ ermittelten Topologie als Netztopologie

## Patentansprüche

1. Computerimplementiertes Verfahren (100) zur Ermittlung einer Netztopologie eines Wärmenetzes, wobei mehrere Prosumer zum Anschluss an das Wärmenetz vorgesehen sind und eine initiale Topologie als Topologie für das Wärmenetz bereitgestellt wird, **gekennzeichnet durch** folgende Schritte:
- (102) Ermitteln einer von der Topologie abhängigen Anschlusswahrscheinlichkeit für jeden Prosumer;
- (104) Ermitteln einer neuen Topologie in Abhängigkeit von den Anschlusswahrscheinlichkeiten;
- (106) Ermitteln einer mit der neuen Topologie assoziierten Zielgröße, wobei die Zielgröße von einer oder mehreren bezüglich der Anschlusswahrscheinlichkeiten erwarteten physikalischen Größen des Wärmenetzes abhängig ist;
- (108, 110) Iteratives Durchführen der Schritte mit der jeweils neuen Topologie, bis die Zielgröße einen im Wesentlichen konstanten Wert aufweist; und
- (112) Bereitstellen der iterativ ermittelten Topologie als Netztopologie des Wärmenetzes.

2. Verfahren gemäß Anspruch 1, **dadurch gekennzeichnet, dass** die Zielgröße abhängig von erwarteten Rohrleitungslängen, erwarteten Wärmeflüssen und/oder einer erwarteten Gesamtwärmeleistung ist.

3. Verfahren gemäß Anspruch 2, **dadurch gekennzeichnet, dass** die Zielgröße proportional zu einer Summe über die erwarteten Rohrleitungslängen, und indirekt proportional zur erwarteten Gesamtwärmeleistung ist.

4. Verfahren gemäß einem der vorhergehenden Ansprüche, **dadurch gekennzeichnet, dass** die initiale Topologie und/oder die neue Topologie mittels eines Optimierungsverfahrens ermittelt wird.

5. Verfahren gemäß einem der vorhergehenden Ansprüche, **dadurch gekennzeichnet, dass** die initiale Topologie und/oder die neu ermittelten Topologien mittels eines Graph-Algorithmus ermittelt werden.

6. Verfahren gemäß Anspruch 5, **dadurch gekennzeichnet, dass** hierbei ein Graph-Algorithmus zur Berechnung von Steinerbäumen verwendet wird.

7. Verfahren gemäß einem der vorhergehenden Ansprüche, **dadurch gekennzeichnet, dass** die Anschlusswahrscheinlichkeiten mittels prosumerspezifischer Daten ermittelt werden.

8. Verfahren gemäß Anspruch 7, **dadurch gekennzeichnet, dass** die Anschlusswahrscheinlichkeiten auf der Grundlage geografischer Daten der Prosumer ermittelt werden.

9. Verfahren gemäß einem der vorhergehenden Ansprüche, **dadurch gekennzeichnet, dass** die Anschlusswahrscheinlichkeiten mittels eines diskreten Entscheidungsmodells ermittelt werden.

10. Verfahren gemäß einem der vorhergehenden Ansprüche, **dadurch gekennzeichnet, dass** das Wärmenetz als Fernwärme und/oder Nahwärmenetz ausgebildet ist.

11. Computerprogrammprodukt, umfassend Anweisungen, die, wenn sie von einer Recheneinheit, insbesondere einem Computer, ausgeführt werden, diese veranlassen, ein Verfahren und/oder Schritte des Verfahrens gemäß einem der Ansprüche 1 bis 10 auszuführen.
